# FASCICULE DE BREVET EUROPEEN

(11) **EP 3 995 682 B1**
(45) Date de publication et mention de la délivrance du brevet: **29.11.2023**
(21) Numéro de dépôt: 21204841.7
(22) Date de dépôt: 26.10.2021
(51) Int. Cl.: F02C 9/42, F02K 5/00, F02C 6/02

(54) **PROCÉDÉ DE PILOTAGE D'UNE INSTALLATION MOTRICE D'UN GIRAVION COMPRENANT AU MOINS DEUX TURBOMOTEURS**
VERFAHREN ZUR STEUERUNG EINER TRIEBWERKSANLAGE EINES DREHFLÜGELFLUGZEUGS, DIE MINDESTENS ZWEI TURBOTRIEBWERKE UMFASST
METHOD FOR CONTROLLING A DRIVE SYSTEM OF A ROTORCRAFT COMPRISING AT LEAST TWO TURBOSHAFT ENGINES

(30) Priorité: 04.11.2020 FR 2011299
(43) Date de publication de la demande: 11.05.2022
(73) Titulaire: Airbus Helicopters, 13725 Marignane Cedex (FR)
(72) Inventeur: COSSETTI, Luca, 13980 ALLEINS (FR); MALBURET, François, 13111 COUDOUX (FR)
(74) Mandataire: GPI Brevets

(56) Documents cités:
- EP-A1- 3 415 436
- EP-A2- 1 990 519
- EP-A2- 2 602 458
- WO-A1-2015/145036

## Description

La présente invention concerne un procédé de pilotage d'une installation motrice d'un giravion comprenant au moins deux turbomoteurs, ainsi que le giravion associé.

Un giravion peut comporter une installation motrice munie d'au moins deux turbomoteurs. Par exemple, un giravion peut comprendre une telle installation motrice pour mettre en mouvement au moins un rotor.

Un turbomoteur comporte usuellement un générateur de gaz et au moins une turbine de travail. Le générateur de gaz est muni d'au moins un compresseur, d'une chambre de combustion et d'une turbine de détente reliée au compresseur par un arbre de liaison. La turbine de travail peut être libre à savoir désolidarisée mécaniquement en rotation du générateur de gaz en étant entraînée en rotation par les gaz sortant du générateur de gaz. De plus, la turbine de travail entraîne mécaniquement en rotation, directement ou indirectement, un arbre de sortie du turbomoteur.

La consommation spécifique en carburant d'un turbomoteur tend à diminuer avec l'augmentation de la puissance développée par ce turbomoteur, au moins tant que la puissance est inférieure à un seuil haut. Par suite, lorsque le turbomoteur développe une puissance élevée, la consommation spécifique en carburant de ce turbomoteur diminue.

Sur un giravion usuel comprenant au moins deux turbomoteurs mettant en mouvement un ou des rotors, et notamment une voilure tournante, la puissance nécessaire pour mettre en mouvement le ou les rotors est fournie conjointement par les turbomoteurs. La puissance totale fournie à un ou aux rotors est sensiblement égale à la somme des puissances développées par les turbomoteurs, aux pertes énergétiques des chaînes cinématiques et de la puissance prélevée pour entraîner des accessoires près.

Or, les turbomoteurs sont dimensionnés pour sécuriser le vol dans le cas de vol le plus défavorable, par exemple suite à une panne totale d'un turbomoteur au décollage.

Dans ce contexte, les turbomoteurs d'un tel giravion peuvent développer durant certaines phases de vol, par exemple en palier, une puissance relativement modérée, éloignée de leur puissance maximale. Par suite, la consommation spécifique en carburant de ces turbomoteurs n'est pas optimale lors de ces phases de vol.

Le document WO 2015/052413 décrit un procédé visant à optimiser la consommation spécifique d'un hélicoptère équipé de deux turbomoteurs. Ce procédé consiste à faire fonctionner en régime de vol continu un premier turbomoteur, un deuxième turbomoteur étant alors en régime dit de « super-ralenti » à puissance nulle et avec la chambre de combustion allumée. Ce régime de super-ralenti est assisté par un entraînement mécanique en rotation de l'arbre de liaison du générateur de gaz du deuxième turbomoteur. Cet entraînement mécanique est réalisé avec un moteur électrique, ou un dispositif d'entraînement mécanique couplé au générateur de gaz du premier turbomoteur ou au rotor de l'hélicoptère, ou un dispositif d'entraînement mécanique fonctionnant avec une source d'énergie telle qu'une source hydraulique, ou pneumatique.

Le document FR 3024707 décrit un système comprenant au moins un turbomoteur qui est aussi susceptible d'être mis en veille en vol. Chaque turbomoteur comporte un générateur de gaz qui coopère avec une machine électrique pouvant fonctionner en mode moteur et en mode générateur d'énergie électrique. Chaque machine électrique est reliée à un réseau de bord d'alimentation en énergie électrique et à au moins un organe de stockage d'énergie électrique primaire non rechargeable et utilisable une seule fois. Le réseau de bord est relié à au moins un alternateur mis en mouvement par une boîte de transmission de puissance.

Au sein d'un giravion bimoteur, un turbomoteur peut fonctionner normalement alors que l'autre turbomoteur est mis en veille. L'organe de stockage d'énergie électrique primaire peut être activé par un moyen d'activation pour fournir à la machine électrique en lien avec le turbomoteur en veille l'énergie nécessaire à sa réactivation rapide.

Le document US 20160333782 décrit un aéronef ayant deux turbomoteurs. Une première machine électrique est disposée sur l'étage haute pression du compresseur à gaz de chaque turbomoteur et une deuxième machine électrique est disposée sur l'arbre de la turbine libre de chaque turbomoteur. En vol de croisière, un premier turbomoteur est exploité pour fournir la puissance mécanique nécessaire pour entraîner une boîte de transmission de puissance pendant que l'autre turbomoteur est mis au ralenti. Dans ces conditions, un contrôleur peut transférer l'énergie électrique extraite par la deuxième machine électrique du turbomoteur en fonctionnement à la première machine électrique intégrée au moteur au ralenti.

Les solutions précédentes visent alors notamment à mettre dans un régime de ralenti un turbomoteur d'une installation bimoteur.

Les documents EP 2 602 458 A2, EP 3 783 211 A1, EP 1 990 519 A2, EP 3 415 436 A1, et WO 2015/145036 sont aussi connus.

La présente invention a alors pour objet de proposer un procédé visant à optimiser la consommation spécifique d'au moins un turbomoteur d'un giravion comprenant au moins deux turbomoteurs.

L'invention vise un procédé de pilotage d'au moins deux turbomoteurs d'un giravion, et en particulier d'un premier turbomoteur et d'un deuxième turbomoteur d'un giravion qui mettent en mouvement une chaîne cinématique commune respectivement via une première chaîne cinématique de sortie et une deuxième chaîne cinématique de sortie, le premier turbomoteur ayant une première turbine libre reliée à la première chaîne cinématique de sortie, ledit giravion ayant une machine électrique de sortie fonctionnant sur requête au moins en mode générateur d'énergie électrique en étant entraînée par la première chaîne cinématique de sortie, le giravion ayant une machine électrique d'entrée fonctionnant sur requête au moins en mode moteur, la machine électrique d'entrée étant reliée par une chaîne cinématique d'entrée à un générateur de gaz de ce deuxième turbomoteur.

Le procédé comporte une phase à consommation spécifique de carburant optimisée comprenant les étapes suivantes :
- alimentation en carburant du premier turbomoteur pour fournir une première puissance non nulle à ladite chaîne cinématique commune,
- fonctionnement en mode générateur d'énergie électrique de la machine électrique de sortie pour générer une énergie électrique,
- alimentation en carburant du deuxième turbomoteur et fonctionnement en mode moteur de la machine électrique d'entrée pour fournir une deuxième puissance non nulle à ladite chaîne cinématique commune.

Pour certaines phases de vol, et par exemple durant un vol d'avancement en palier, la puissance nécessaire pour l'entraînement de la chaîne cinématique commune est moindre par rapport à la puissance totale que peuvent développer les turbomoteurs conjointement.

Selon certains arts antérieurs, un turbomoteur est sollicité selon un régime relativement élevé et l'autre turbomoteur est mis au ralenti.

L'invention suit une autre stratégie. Selon l'invention, on met en oeuvre un procédé de pilotage conformément à la revendication 1 et un giravion tel que défini dans la revendication 5.

En effet, selon l'invention le premier turbomoteur est sollicité pour développer une puissance de sortie élevée, par exemple relativement proche de sa puissance maximale et déterminée pour optimiser sa consommation spécifique en carburant. Le premier turbomoteur n'est pas dans un mode de fonctionnement au ralenti durant lequel il ne fournit pas une puissance motrice à ladite chaîne cinématique commune mais fournit une première puissance non nulle à ladite chaîne cinématique commune. Ce procédé permet ainsi d'obtenir un premier gain au travers d'une consommation spécifique de carburant optimisée sur le premier turbomoteur. Par exemple, la puissance de sortie élevée est une puissance mémorisée et/ou supérieure ou égale à une puissance seuil ou comprise dans une plage de puissance mémorisée. Toutefois, cette puissance de sortie élevée n'est pas transmise intégralement à la chaîne cinématique commune pour que la chaîne cinématique commune soit aussi mise en mouvement par le deuxième turbomoteur. En effet, une partie de cette puissance de sortie est prélevée par la machine électrique de sortie pour générer une énergie électrique. Dès lors, seulement une autre partie de cette puissance de sortie dite « première puissance » est transmise à la chaîne cinématique commune. Cette première puissance est inférieure à la puissance nécessaire pour l'entraînement de la chaîne cinématique commune au cas de vol présent.

Dès lors, le deuxième turbomoteur fournit une deuxième puissance non nulle à ladite chaîne cinématique commune, contrairement à un moteur en veille. Le deuxième turbomoteur n'est pas dans un mode de fonctionnement au ralenti durant lequel il ne fournit pas une puissance motrice à ladite chaîne cinématique commune mais fournit une deuxième puissance non nulle à ladite chaîne cinématique commune. La somme de la première puissance et de la deuxième puissance est égale à la puissance nécessaire pour l'entraînement de la chaîne cinématique commune au cas de vol présent. La deuxième puissance peut être par exemple inférieure ou égale à la première puissance. A cet effet, la machine électrique d'entrée est activée pour fonctionner en mode moteur afin de participer à l'entraînement du générateur de gaz du deuxième turbomoteur.

L'apport de la machine électrique d'entrée permet alors de diminuer le débit de carburant alimentant le deuxième turbomoteur afin de fournir la deuxième puissance requise. La température des gaz à la sortie du générateur de gaz est par suite réduite. Ce fonctionnement induit alors un deuxième gain au travers d'une consommation de carburant et d'une émission de dioxyde de carbone réduites.

Ce procédé propose ainsi de mettre en oeuvre une dissymétrie dans l'utilisation des turbomoteurs. En effet, le premier turbomoteur est piloté pour fournir une puissance de sortie élevée afin de fonctionner selon un point de fonctionnement générant une consommation spécifique optimisée et entraine une machine électrique de sortie pour consommer une partie du surcroit de puissance produit, alors que le deuxième turbomoteur est assisté par la machine électrique d'entrée pour fonctionner selon un point de fonctionnement à consommation et à pollution réduites.

Le procédé peut de plus comporter une ou plusieurs des caractéristiques qui suivent.

Ainsi, chaque turbomoteur peut comprendre sa propre machine électrique d'entrée coopérant avec son générateur de gaz et sa propre machine électrique de sortie coopérant avec sa chaîne cinématique de sortie. Chaque turbomoteur peut ainsi représenter le premier turbomoteur ou le deuxième turbomoteur décrit précédemment selon le besoin.

Durant la phase à consommation spécifique de carburant optimisée, la machine électrique d'entrée du turbomoteur faisant office de premier turbomoteur n'est pas active, à savoir ne fonctionne pas en mode générateur d'énergie électrique, ni même en mode moteur.

Selon une possibilité compatible avec la précédente, le premier turbomoteur et le deuxième turbomoteur peuvent être différents et peuvent développer des puissances maximales différentes.

Selon une possibilité compatible avec les précédentes, ladite première puissance peut être égale à une puissance d'origine fournie à ladite chaîne cinématique commune par le premier turbomoteur préalablement à une initiation de ladite phase à consommation spécifique de carburant optimisée, ladite machine électrique de sortie étant inactive préalablement à ladite initiation de ladite phase à consommation spécifique de carburant optimisée.

L'expression « ladite machine électrique de sortie étant inactive » signifie que la machine électrique de sortie ne fonctionne pas en mode générateur d'énergie électrique, ni même en mode moteur.

Ainsi, lors de la phase à consommation spécifique de carburant optimisée, le premier turbomoteur reçoit éventuellement plus de carburant pour produire un surcroit de puissance et pour fonctionner avec un meilleur rendement. Par contre, le surcroit de puissance est totalement utilisé par la machine électrique de sortie pour produire l'énergie électrique.

Selon une possibilité compatible avec les précédentes, ladite deuxième puissance peut être égale à une puissance initiale fournie à ladite chaîne cinématique commune par le deuxième turbomoteur à une initiation de ladite phase à consommation spécifique de carburant optimisée, ladite machine électrique d'entrée étant inactive préalablement à une initiation de ladite phase à consommation spécifique de carburant optimisée.

L'expression « ladite machine électrique d'entrée étant inactive » signifie que la machine électrique d'entrée ne fonctionne pas en mode moteur, ni même en mode générateur d'énergie électrique.

Ainsi, à l'initiation de la phase à consommation spécifique de carburant optimisée, le deuxième turbomoteur fournit la même puissance que précédemment à la chaîne cinématique commune. Par contre, le deuxième turbomoteur est à cet effet désormais assisté par la machine électrique d'entrée associée. Le débit d'alimentation en carburant de ce deuxième turbomoteur est alors réduit.

Selon une possibilité compatible avec les précédentes, ladite chaîne cinématique commune est mise en mouvement conjointement par ledit premier turbomoteur et ledit deuxième turbomoteur durant ladite phase à consommation spécifique de carburant optimisée.

Selon une possibilité compatible avec les précédentes, durant ledit fonctionnement en mode moteur de la machine électrique d'entrée, au moins une partie de ladite énergie électrique alimente électriquement ladite machine électrique d'entrée.

L'énergie électrique créée en transformant une puissance mécanique prélevée sur la première chaîne cinématique de sortie peut être en tout ou partie transmise par une liaison électrique à la machine électrique d'entrée. En alimentant électriquement la machine électrique d'entrée avec toute l'énergie électrique produite par la machine électrique de sortie, le procédé évite un problème de stockage d'énergie électrique.

Selon une possibilité, au moins une partie de l'énergie électrique produite par la machine électrique de sortie peut être stockée dans au moins un organe de stockage d'énergie électrique réversible usuel. Par exemple, cette énergie électrique stockée peut être utilisée ultérieurement pour obtenir un surcroit de puissance à l'aide d'une machine électrique entraînant le générateur de gaz ou la chaîne cinématique de sortie d'un turbomoteur.

Selon une possibilité compatible avec les précédentes, ladite machine électrique de sortie peut par exemple aussi fonctionner en mode moteur.

Ainsi, le procédé de l'invention peut comporter une phase d'assistance distincte de la phase à consommation spécifique de carburant optimisée durant laquelle la machine électrique de sortie fonctionne en mode moteur.

Outre un procédé, l'invention vise un giravion muni d'au moins un premier turbomoteur et un deuxième turbomoteur qui mettent en mouvement une chaîne cinématique commune respectivement via une première chaîne cinématique de sortie et une deuxième chaîne cinématique de sortie, le premier turbomoteur ayant une première turbine libre reliée à la première chaîne cinématique de sortie, la chaîne cinématique commune mettant au moins en mouvement une voilure tournante, ledit giravion ayant une machine électrique de sortie fonctionnant sur requête au moins en mode générateur d'énergie électrique en étant entraînée par la première chaîne cinématique de sortie, le giravion ayant une machine électrique d'entrée fonctionnant sur requête au moins en mode moteur, la machine électrique d'entrée étant reliée par une chaîne cinématique d'entrée à un générateur de gaz de ce deuxième turbomoteur.

Ce giravion comporte un système d'assistance configuré pour mettre en oeuvre le procédé de l'invention.

Selon une possibilité, le premier turbomoteur peut comporter une machine additionnelle d'entrée fonctionnant sur requête au moins en mode moteur, la machine additionnelle d'entrée étant reliée par une chaîne additionnelle cinématique d'entrée à un générateur de gaz de ce premier turbomoteur, le deuxième turbomoteur comporte une machine additionnelle de sortie fonctionnant au moins en mode générateur d'énergie électrique en étant entraînée par la deuxième chaîne cinématique de sortie.

Bien évidemment, le procédé décrit précédemment peut être mis en oeuvre à l'aide des machines additionnelles.

Selon une possibilité compatible avec la précédente, ladite machine électrique de sortie peut être configurée pour fonctionner dans un mode moteur.

Selon une possibilité compatible avec les précédentes, ladite machine additionnelle de sortie peut être configurée pour fonctionner dans un mode moteur.

Selon une possibilité compatible avec les précédentes, ledit système peut comporter:
- un contrôleur pilotant la machine électrique de sortie et la machine électrique d'entrée, voire le cas échéant la machine additionnelle d'entrée et la machine additionnelle de sortie,
- un premier doseur de carburant commandé par le contrôleur pour alimenter en carburant le premier turbomoteur,
- un deuxième doseur de carburant commandé par le contrôleur pour alimenter en carburant le deuxième turbomoteur.

Le terme contrôleur peut désigner un équipement comprenant une unique entité ou plusieurs entités. Par exemple, le contrôleur peut comprendre une entité par turbomoteur dénommée usuellement ECU pour l'expression anglaise « Engine Control Unit ». Une des entités ECU ou un autre calculateur peut alors mettre en oeuvre le procédé sur ordre d'un pilote ou lorsque des conditions prédéterminées sont remplies par exemple.

L'invention et ses avantages apparaîtront avec plus de détails dans le cadre de la description qui suit avec des exemples donnés à titre illustratif en référence aux figures annexées qui représentent :
la figure 1, un schéma d'un giravion selon l'invention,
la figure 2, un schéma présentant le procédé de l'invention, et
la figure 3, un schéma illustrant un gain en consommation spécifique.

Les éléments présents dans plusieurs figures distinctes sont affectés d'une seule et même référence.

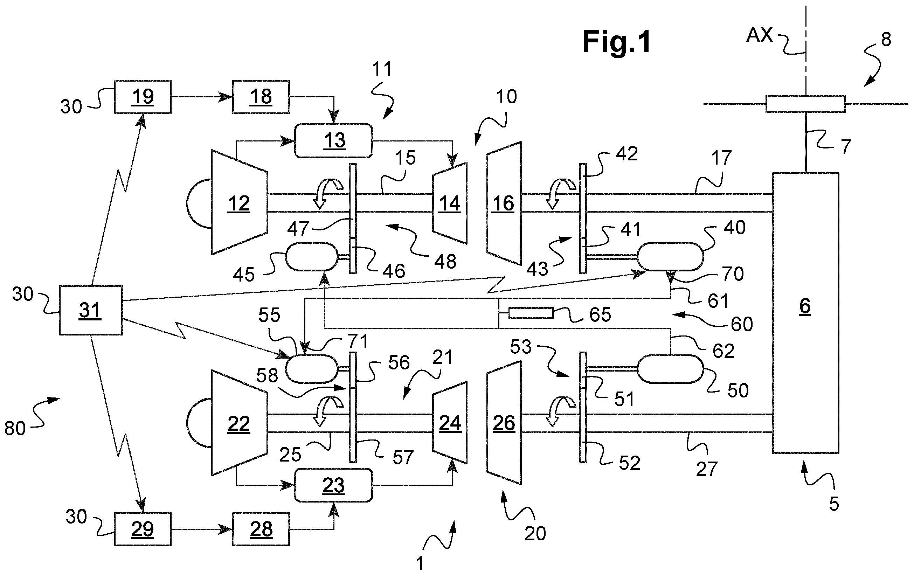

La figure 1 présente un giravion 1 selon l'invention.

Le giravion 1 comporte une installation motrice comprenant plusieurs turbomoteurs pour mettre en mouvement une chaîne cinématique 5. Cette chaîne cinématique est dite « chaîne cinématique commune 5 » par commodité dans la mesure où elle est mise en mouvement par plusieurs turbomoteurs de l'installation motrice.

A titre d'exemple, la chaîne cinématique commune 5 peut comprendre une voilure tournante 8. En particulier, la chaîne cinématique commune 5 peut comprendre une boite de transmission de puissance 6 mettant notamment en rotation un mât rotor 7 autour d'un axe de rotation AX, le mât rotor 7 entraînant en rotation la voilure tournante 8.

Dès lors, l'installation motrice comporte un premier turbomoteur 10 mettant en mouvement une première chaîne cinématique de sortie 17 qui débouche sur la chaîne cinématique commune 5. De plus, l'installation motrice comporte un deuxième turbomoteur 20 mettant en mouvement une deuxième chaîne cinématique de sortie 27 qui débouche sur la chaîne cinématique commune 5.

Sauf indication contraire, le terme « premier » ou « première » fait référence par la suite à un organe du premier turbomoteur 10 ou coopérant avec ce premier turbomoteur 10 afin d'être distingué d'autres organes du même type. A l'inverse, le terme « deuxième » fait référence par la suite à un organe du deuxième turbomoteur 20 ou coopérant avec ce deuxième turbomoteur 20 afin d'être distingué d'autres organes du même type.

Chaque turbomoteur comporte de fait un générateur de gaz et une turbine de travail, de type turbine libre selon l'exemple.

Le premier turbomoteur 10 comporte donc usuellement un premier générateur de gaz 11 muni d'au moins un premier compresseur 12 relié par un premier arbre interne 15 à au moins une première turbine haute pression 14. Le premier générateur de gaz 11 comporte de plus une première chambre de combustion 13 interposée fluidiquement entre le premier compresseur 12 et la première turbine haute pression 14. La première chambre de combustion 13 est reliée à un réseau d'alimentation en carburant comprenant un premier doseur de carburant 18. Le premier doseur de carburant 18 peut être piloté par un premier calculateur moteur 19. En outre, le premier turbomoteur 10 comporte au moins une première turbine libre 16 entraînant en rotation la première chaîne cinématique de sortie 17, et par exemple fixée à un arbre ou autre de la première chaîne cinématique de sortie 17. La première chaîne cinématique de sortie 17 peut s'étendre au moins partiellement en dehors du premier turbomoteur 10 et peut comprendre au moins un arbre, au moins un connecteur mécanique, au moins un palier...

Le deuxième turbomoteur 20 comporte usuellement un deuxième générateur de gaz 21 muni d'au moins un deuxième compresseur 22 relié par un deuxième arbre interne 25 à au moins une deuxième turbine haute pression 24. Le deuxième générateur de gaz 21 comporte de plus une deuxième chambre de combustion 23 interposée fluidiquement entre le deuxième compresseur 22 et la deuxième turbine haute pression 24. La deuxième chambre de combustion 23 est reliée à un réseau d'alimentation en carburant comprenant un deuxième doseur de carburant 28. Le deuxième doseur de carburant 28 peut être piloté par un deuxième calculateur moteur 29. En outre, le deuxième turbomoteur 20 comporte au moins une deuxième turbine libre 26 entraînant en rotation la deuxième chaîne cinématique de sortie 27, et par exemple fixée à un arbre ou autre de la deuxième chaîne cinématique de sortie 27. La deuxième chaîne cinématique de sortie 27 peut s'étendre au moins partiellement en dehors du deuxième turbomoteur 20 et peut comprendre au moins un arbre, au moins un connecteur mécanique, au moins un palier...

Eventuellement, le premier calculateur moteur 19 et le deuxième calculateur moteur 29 peuvent former deux sous-ensembles d'un même calculateur, par exemple en comprenant des segments de code différents mémorisés dans un même calculateur.

On se référera à la littérature si nécessaire pour avoir une description plus détaillée d'une telle installation.

Par ailleurs, le giravion 1 comporte un système d'assistance 80 pour mettre en oeuvre le procédé de l'invention.

Ce système d'assistance 80 comporte une machine électrique de sortie 40 fonctionnant sur requête au moins en mode générateur d'énergie électrique voire aussi en mode moteur. Une telle machine électrique de sortie 40 peut ainsi prendre la forme d'un alternateur ou d'un générateur/démarreur par exemple.

La machine électrique de sortie 40 est liée à la première chaîne cinématique de sortie 17 par une chaîne cinématique 43 pour pouvoir être mise en mouvement par cette première chaîne cinématique de sortie 17 lorsque le mode générateur d'énergie électrique est enclenché. Dans ce cas, la machine électrique de sortie 40 produit une énergie électrique 70, illustrée par une flèche sur la figure 1, transmise à un réseau électrique 60. Lorsque la machine électrique de sortie 40 peut fonctionner en mode moteur, alors la machine électrique de sortie 40 peut participer à la mise en mouvement de la première chaîne cinématique de sortie 17. A titre d'exemple, la machine électrique de sortie 40 peut comporter une sortie solidaire d'un pignon de sortie 41, ce pignon de sortie 41 engrenant une roue 42 solidaire d'un arbre de la première chaîne cinématique de sortie 17.

Ce système d'assistance 80 comporte une machine électrique d'entrée 55 fonctionnant sur requête au moins en mode moteur, voire aussi en mode générateur d'énergie électrique. Une telle machine électrique d'entrée 55 peut ainsi comprendre un moteur électrique, voire un générateur/démarreur par exemple.

La machine électrique d'entrée 55 est reliée par une chaîne cinématique d'entrée 58 au deuxième générateur de gaz 21 du deuxième turbomoteur 20, par exemple à un deuxième compresseur 22 ou au deuxième arbre interne 25.

La machine électrique d'entrée 55 est ainsi liée au deuxième générateur de gaz 21 pour participer à la mise en mouvement de ce deuxième générateur de gaz 21 lorsque le mode moteur est enclenché. Lorsque le mode générateur d'énergie électrique est éventuellement enclenché, la machine électrique d'entrée 55 produit une énergie électrique transmise au réseau électrique 60. A titre d'exemple, la machine électrique d'entrée 55 peut comporter une sortie solidaire d'un pignon de sortie 56, ce pignon de sortie 56 engrenant une roue 57 solidaire du deuxième arbre interne 25.

Le réseau électrique 60 peut notamment comprendre une liaison électrique 61 reliant électriquement la machine électrique de sortie 40 et la machine électrique d'entrée 55 afin qu'au moins une partie 71, illustrée par une flèche, de l'énergie électrique 70 produite par la machine électrique de sortie 40 alimente électriquement la machine électrique d'entrée 55.

Selon une possibilité compatible avec la précédente, le réseau électrique 60 peut comprendre au moins un organe de stockage 65 susceptible de stocker notamment au moins une partie de ladite énergie électrique 70, tel qu'une batterie électrique par exemple. Le réseau électrique 60 peut comprendre divers organes usuels pour faire circuler l'énergie électrique 70 au sein du réseau électrique 60 vers la machine électrique d'entrée 55 et/ou l'organe de stockage 65 au choix, tel qu'au moins un interrupteur par exemple.

Eventuellement, le premier turbomoteur 10 peut comporter une machine additionnelle d'entrée 45 électrique fonctionnant sur requête au moins en mode moteur. Une telle machine additionnelle d'entrée 45 peut ainsi comprendre un moteur électrique, voire un générateur/démarreur par exemple.

La machine additionnelle d'entrée 45 est ainsi liée au premier générateur de gaz 11 par une chaîne cinématique 48 pour participer à la mise en mouvement de ce premier générateur de gaz 11 lorsque le mode moteur est enclenché. Lorsque le mode générateur d'énergie électrique est éventuellement enclenché, la machine additionnelle d'entrée 45 produit une énergie électrique transmise au réseau électrique 60. A titre d'exemple, la machine additionnelle d'entrée 45 comporte une sortie solidaire d'un pignon de sortie 46, ce pignon de sortie 46 engrenant une roue 47 solidaire du premier arbre interne 15.

Eventuellement, une machine additionnelle de sortie 50 électrique fonctionnant au moins en mode générateur d'énergie électrique est entraînée par la deuxième chaîne cinématique de sortie 27 via une chaîne cinématique de liaison 53. Une telle machine additionnelle de sortie 50 peut ainsi prendre la forme d'un alternateur ou d'un générateur/démarreur par exemple.

La machine additionnelle de sortie 50 est liée à la deuxième chaîne cinématique de sortie 27 par la chaîne cinématique de liaison 53 pour pouvoir être mise en mouvement par cette deuxième chaîne cinématique de sortie 27 lorsque le mode générateur d'énergie électrique est enclenché. Dans ce cas la machine additionnelle de sortie 50 produit une énergie électrique transmise au réseau électrique 60. Lorsque la machine additionnelle de sortie 50 peut fonctionner en mode moteur, alors la machine additionnelle de sortie 50 peut participer à la mise en mouvement de la deuxième chaîne cinématique de sortie 27. A titre d'exemple, la machine additionnelle de sortie 50 comporte une sortie solidaire d'un pignon de sortie 51, ce pignon de sortie 51 engrenant une roue 52 solidaire d'un arbre de la deuxième chaîne cinématique de sortie 27.

Par ailleurs, le réseau électrique 60 peut notamment comprendre une liaison électrique 62 reliant électriquement la machine additionnelle de sortie 50 et la machine additionnelle d'entrée 45.

Dans ce cas de figure, chaque turbomoteur peut représenter le premier turbomoteur ou le deuxième turbomoteur de l'installation.

Par ailleurs, le système d'assistance 80 comporte un contrôleur 30 pilotant les diverses machines 40, 45, 50, 55 et les doseurs de carburant 18, 28 précités, voire au moins un organe du réseau électrique pour appliquer le procédé de l'invention.

Le contrôleur 30 peut comprendre une ou plusieurs unités. Ainsi le contrôleur 30 peut comprendre le premier calculateur moteur 19 et/ou le deuxième calculateur moteur 29 et/ou un autre calculateur 31 selon l'exemple illustré.

Chaque calculateur peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

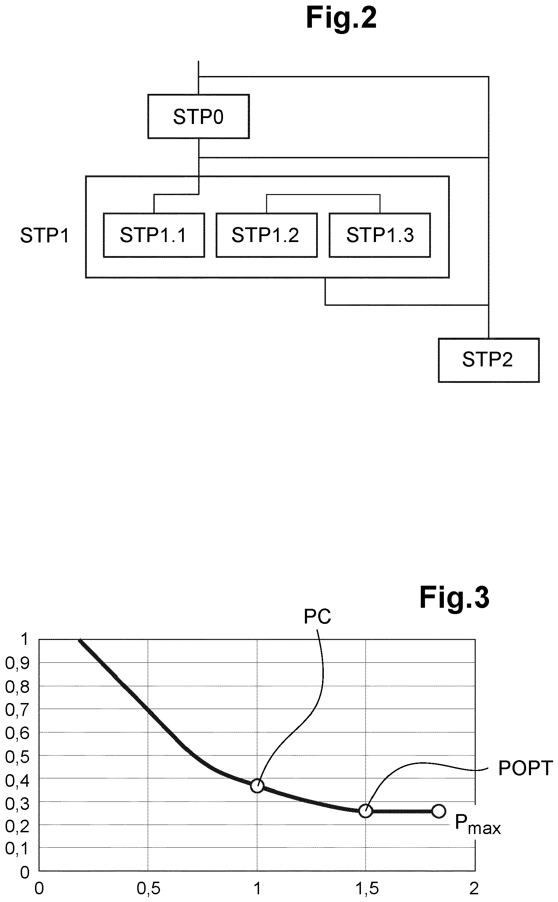

En référence à la figure 2, le procédé comporte une phase STP1 à consommation spécifique de carburant optimisée. Cette phase STP1 à consommation spécifique de carburant optimisée peut être initiée suite à la sollicitation d'une interface homme-machine, cette interface générant un signal transmis au contrôleur 30 pour requérir sa mise en oeuvre. Cette phase STP1 à consommation spécifique de carburant optimisée peut aussi être initiée quand des conditions prédéterminées sont remplies. Par exemple, le contrôleur 30 peut être en communication avec au moins un senseur à cet effet. A titre illustratif, le contrôleur 30 peut recevoir un signal porteur de la vitesse d'avancement du giravion 1 et un signal porteur de l'altitude du giravion 1, le contrôleur 30 mettant en oeuvre automatiquement la phase STP1 à consommation spécifique de carburant optimisée si la vitesse d'avancement est supérieure à un seuil de vitesse mémorisé et si l'altitude est constante à une marge près, par exemple pendant une période prédéterminée.

La phase STP1 à consommation spécifique de carburant optimisée comporte les étapes suivantes, ces étapes pouvant être réalisées simultanément ou l'une après l'autre et pas nécessairement dans l'ordre décrit.

Ainsi, la phase STP1 à consommation spécifique de carburant optimisée comporte une étape d'alimentation STP1.1 en carburant du premier turbomoteur 10 pour fournir une première puissance non nulle à la chaîne cinématique commune 5. Cette première puissance peut avoir une valeur mémorisée dans le contrôleur 30, une valeur correspondant à un pourcentage mémorisée de la puissance nécessaire pour la mise en mouvement de la chaîne cinématique commune, une valeur égale à la valeur précédemment atteinte...

Le contrôleur 30 pilote ainsi le premier doseur de carburant 18 pour que le premier turbomoteur 10 fournisse une puissance de sortie POPT élevée à la première chaîne cinématique de sortie 17. A titre illustratif et selon un exemple, le contrôleur 30 pilote le premier doseur de carburant 18 pour atteindre une puissance de sortie POPT élevée prédéterminée. Selon un autre exemple, le contrôleur 30 pilote le premier doseur de carburant 18 pour que le premier doseur de carburant 18 soit placé dans une position prédéterminée correspondant à la puissance de sortie POPT élevée souhaitée. Le premier doseur de carburant 18 alimente en carburant le premier générateur de gaz selon un débit non nulle, et de fait différent d'un débit engendrant une mise au ralenti du premier turbomoteur.

A titre illustratif, selon l'exemple de la figure 1 le calculateur 31 transmet un signal au premier calculateur 19 qui pilote à son tour le premier doseur de carburant 18 en appliquant au moins une règle prédéterminée.

La figure 3 présente un diagramme comprenant en abscisse la puissance développée par le premier turbomoteur 10 et en ordonnée la consommation spécifique du premier turbomoteur 10. Par rapport à une puissance usuellement fournie PC par un système de l'art antérieur, le premier turbomoteur 10 peut être piloté pour que la puissance de sortie POPT élevée soit plus proche de la puissance maximale PMAX pouvant être développée. La consommation spécifique en carburant du premier turbomoteur 10 est alors optimisée, voire minimale si la puissance de sortie POPT est égale à la puissance maximale PMAX selon l'exemple.

De plus, la phase STP1 à consommation spécifique de carburant optimisée comporte une étape de fonctionnement STP1.2 en mode générateur d'énergie électrique de la machine électrique de sortie 40 pour générer une énergie électrique.

Par exemple le calculateur 31 transmet un signal de commande à la machine électrique de sortie 40 pour commander son fonctionnement en mode générateur d'énergie électrique. Une partie de la puissance de sortie POPT élevée fournit par le premier turbomoteur 10 est alors convertie en une énergie électrique 70 injectée dans le réseau électrique 60.

A l'inverse, la machine électrique d'entrée du turbomoteur faisant office de premier turbomoteur peut ne pas être active, à savoir ne fonctionne pas en mode générateur d'énergie électrique, ni même en mode moteur.

Selon une possibilité, la première puissance peut être égale à la puissance d'origine fournie à ladite chaîne cinématique commune 5 par le premier turbomoteur 10 durant la phase STP0 qui précède la phase STP1 à consommation spécifique de carburant optimisée. Dès lors, le surcroit de puissance fournit par le premier turbomoteur 10 est intégralement prélevé par la machine électrique de sortie 40. Au regard de la chaîne cinématique commune 5, le premier turbomoteur 10 fournit la même puissance.

Selon un autre aspect, la phase STP1 à consommation spécifique de carburant optimisée comporte une étape d'alimentation STP1.3 en carburant du deuxième turbomoteur 20 et en complément une étape de fonctionnement en mode moteur de la machine électrique d'entrée 55.

Le contrôleur 30 transmet ainsi un signal de commande à la machine électrique d'entrée 55 pour requérir son fonctionnement en mode moteur et pilote le deuxième doseur de carburant 28 pour réduire le débit de carburant transmis au deuxième turbomoteur 20. Au moins une partie 71 voire toute l'énergie électrique 70 produite par la machine électrique de sortie 40 est transmise, directement ou indirectement, à ladite machine électrique d'entrée 55.

Le deuxième turbomoteur 20 n'est donc pas en veille mais participe activement à la mise en mouvement de la chaîne cinématique commune 5.

Selon une possibilité, la deuxième puissance est égale à une puissance initiale fournie à ladite chaîne cinématique commune 5 par le deuxième turbomoteur 20 durant la phase STP0 qui précède la phase STP1 à consommation spécifique de carburant optimisée. Selon un exemple, la machine électrique de sortie 40 peut fournir une puissance prédéterminée, le deuxième doseur de carburant étant piloté pour que le deuxième turbomoteur fournisse ladite deuxième puissance à la chaîne cinématique commune.

Par suite, la chaîne cinématique commune 5 est mise en mouvement conjointement par le premier turbomoteur 10 et ledit deuxième turbomoteur 20 durant la phase STP1 à consommation spécifique de carburant optimisée.

Selon une possibilité, le procédé peut comporter par ailleurs une phase STP2 d'assistance distincte de la phase STP1 à consommation spécifique de carburant optimisée. Durant une telle phase STP2 d'assistance, au moins une des machines électriques 40, 55 et des machines additionnelles 45, 50 fonctionne en mode moteur pour apporter un surcroit de puissance.

Par exemple, la machine électrique de sortie 40 fonctionne en mode moteur.

Une telle phase STP2 d'assistance peut être initiée sur requête d'un pilote à l'aide d'une interface homme-machine ou encore par le contrôleur 30 dans des conditions prédéterminées.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Procédé de pilotage d'au moins un premier turbomoteur (10) et un deuxième turbomoteur (20) d'un giravion (1) qui mettent en mouvement une chaîne cinématique commune (5) respectivement via une première chaîne cinématique de sortie (17) et une deuxième chaîne cinématique de sortie (27), le premier turbomoteur (10) ayant une première turbine libre (16) reliée à la première chaîne cinématique de sortie (17), ledit giravion (1) ayant une machine électrique de sortie (40) fonctionnant sur requête au moins en mode générateur d'énergie électrique en étant entraîné par la première chaîne cinématique de sortie (17), le giravion (1) ayant une machine électrique d'entrée (55) fonctionnant sur requête au moins en mode moteur, la machine électrique d'entrée (55) étant reliée par une chaîne cinématique d'entrée (58) à un générateur de gaz (21) de ce deuxième turbomoteur (20),
**caractérisé en ce que** le procédé comporte une phase (STP1) à consommation spécifique de carburant optimisée comprenant les étapes suivantes :
- alimentation (STP1.1) en carburant du premier turbomoteur (10) pour fournir une première puissance non nulle à ladite chaîne cinématique commune (5), ladite première puissance étant égale à une puissance d'origine fournie à ladite chaîne cinématique commune (5) par le premier turbomoteur (10) préalablement à une initiation de ladite phase (STP1) à consommation spécifique de carburant optimisée, ladite machine électrique de sortie (40) étant inactive préalablement à ladite initiation de ladite phase (STP1) à consommation spécifique de carburant optimisée,
- fonctionnement (STP1.2) en mode générateur d'énergie électrique de la machine électrique de sortie (40) pour générer une énergie électrique,
- alimentation (STP1.3) en carburant du deuxième turbomoteur (20) et fonctionnement en mode moteur de la machine électrique d'entrée (55) pour fournir une deuxième puissance non nulle à ladite chaîne cinématique commune (5), ladite deuxième puissance étant égale à une puissance initiale fournie à ladite chaîne cinématique commune par le deuxième turbomoteur (20) préalablement à une initiation de ladite phase (STP1) à consommation spécifique de carburant optimisée, ladite machine électrique d'entrée (55) étant inactive préalablement à une initiation de ladite phase (STP1) à consommation spécifique de carburant optimisée, aucun des premier turbomoteur et deuxième turbomoteur n'étant au ralenti.

2. Procédé selon la revendication 1,
**caractérisé en ce que** ladite chaîne cinématique commune (5) est mise en mouvement conjointement par ledit premier turbomoteur (10) et ledit deuxième turbomoteur (20) durant ladite phase (STP1) à consommation spécifique de carburant optimisée.

3. Procédé selon l'une quelconque des revendications 1 à 2, **caractérisé en ce que** durant ledit fonctionnement en mode moteur de la machine électrique d'entrée (55), au moins une partie (71) de ladite énergie électrique (70) alimente électriquement ladite machine électrique d'entrée (55).

4. Procédé selon l'une quelconque des revendications 1 à 3, **caractérisé en ce que** ladite machine électrique de sortie (40) pouvant fonctionner en mode moteur, le procédé comporte une phase (STP2) d'assistance distincte de la phase (STP1) à consommation spécifique de carburant optimisée durant laquelle la machine électrique de sortie (40) fonctionne en mode moteur.

5. Giravion (1) muni d'au moins un premier turbomoteur (10) et un deuxième turbomoteur (20) qui mettent en mouvement une chaîne cinématique commune (5) respectivement via une première chaîne cinématique de sortie (17) et une deuxième chaîne cinématique de sortie (27), le premier turbomoteur (10) ayant une première turbine libre (16) reliée à la première chaîne cinématique de sortie (17), la chaîne cinématique commune (5) mettant au moins en mouvement une voilure tournante (8), ledit giravion (1) ayant une machine électrique de sortie (40) fonctionnant sur requête au moins en mode générateur d'énergie électrique en étant entraîné par la première chaîne cinématique de sortie (17), le giravion (1) ayant une machine électrique d'entrée (55) fonctionnant sur requête au moins en mode moteur, la machine électrique d'entrée (55) étant reliée par une chaîne cinématique d'entrée (58) à un générateur de gaz (21) de ce deuxième turbomoteur (20),
**caractérisé en ce que** le giravion (1) comporte un système d'assistance (80) configuré pour mettre en oeuvre le procédé selon l'une quelconque des revendications 1 à 4.

6. Giravion selon la revendication 5,
**caractérisé en ce que** ledit premier turbomoteur (10) comporte une machine additionnelle d'entrée (45) fonctionnant sur requête au moins en mode moteur, la machine additionnelle d'entrée (45) étant reliée par une chaîne additionnelle cinématique d'entrée (48) à un générateur de gaz (11) de ce premier turbomoteur (10), le deuxième turbomoteur (20) comporte une machine additionnelle de sortie (50) fonctionnant au moins en mode générateur d'énergie électrique en étant entraîné par la deuxième chaîne cinématique de sortie (27).

7. Giravion selon la revendication 6,
**caractérisé en ce que** ladite machine additionnelle de sortie (50) est configurée pour fonctionner dans un mode moteur.

8. Giravion selon l'une quelconque des revendications 5 à 7, **caractérisé en ce que** ledit système d'assistance (80) comporte:
- un contrôleur (30) pilotant la machine électrique de sortie (40) et la machine électrique d'entrée (55),
- un premier doseur de carburant (18) commandé par le contrôleur (30) pour alimenter en carburant le premier turbomoteur (10),
- un deuxième doseur de carburant (28) commandé par le contrôleur (30) pour alimenter en carburant le deuxième turbomoteur (20).

## Patentansprüche

1. Verfahren zum Steuern von mindestens einem ersten Turbomotor (10) und einem zweiten Turbomotor (20) eines Drehflügelflugzeugs (1), die einen gemeinsamen Triebstrang (5) jeweils über einen ersten Ausgangstriebstrang (17) und einen zweiten Ausgangstriebstrang (27) in Bewegung setzen, wobei der erste Turbomotor (10) eine erste freie Turbine (16) hat, die mit dem ersten Ausgangstriebstrang (17) verbunden ist, der Drehflügler (1) eine elektrische Ausgangsmaschine (40) hat, die auf Anforderung zumindest im Generatormodus für elektrische Energie arbeitet, indem sie von dem ersten Ausgangstriebstrang (17) angetrieben wird, der Drehflügler (1) eine elektrische Eingangsmaschine (55) hat, die auf Anforderung zumindest im Motormodus arbeitet, wobei die elektrische Eingangsmaschine (55) über einen Eingangstriebstrang (58) mit einem Gasgenerator (21) dieses zweiten Turbomotors (20) verbunden ist,
**dadurch gekennzeichnet, dass** das Verfahren eine Phase (STP1) mit optimiertem spezifischem Kraftstoffverbrauch umfasst, die die folgenden Schritte umfasst:
- Versorgen (STP1.1) des ersten Turbomotors (10) mit Kraftstoff, um dem gemeinsamen Antriebsstrang (5) eine erste Leistung ungleich Null zuzuführen, wobei die erste Leistung gleich einer ursprünglichen, dem gemeinsamen Antriebsstrang (5) durch den ersten Turbomotor (10) vor einer Einleitung der Phase (STP1) mit optimiertem spezifischem Kraftstoffverbrauch zugeführten Leistung ist, wobei die elektrische Ausgangsmaschine (40) vor der Einleitung der Phase (STP1) mit optimiertem spezifischem Kraftstoffverbrauch inaktiv ist,
- Betreiben (STP1.2) der elektrischen Ausgangsmaschine (40) im Generatormodus für elektrische Energie, um elektrische Energie zu erzeugen,
- Versorgen (STP1.3) des zweiten Turbomotors (20) mit Kraftstoff und Betreiben der elektrischen Eingangsmaschine (55) im Motormodus, um dem gemeinsamen Triebstrang (5) eine zweite Leistung ungleich Null zuzuführen, wobei die zweite Leistung gleich einer ursprünglichen, dem gemeinsamen Triebstrang durch den zweiten Turbomotor (20) vor einer Einleitung der Phase (STP1) mit optimiertem spezifischem Kraftstoffverbrauch zugeführten Leistung ist, wobei die elektrische Eingangsmaschine (55) vor einer Einleitung der Phase (STP1) mit optimiertem spezifischen Kraftstoffverbrauch inaktiv ist, wobei sich weder die erste Turbomaschine noch die zweite Turbomaschine im Leerlauf befindet.

2. Verfahren nach Anspruch 1,
**dadurch gekennzeichnet, dass** der gemeinsame Triebstrang (5) während der Phase (STP1) mit optimiertem spezifischem Kraftstoffverbrauch von dem ersten Turbomotor (10) und dem zweiten Turbomotor (20) gemeinsam angetrieben wird.

3. Verfahren nach einem der Ansprüche 1 bis 2,
**dadurch gekennzeichnet, dass** während des Motorbetriebs der elektrischen Eingangsmaschine (55) mindestens ein Teil (71) der elektrischen Energie (70) die elektrische Eingangsmaschine (55) elektrisch versorgt.

4. Verfahren nach einem der Ansprüche 1 bis 3,
**dadurch gekennzeichnet, dass** die elektrische Ausgangsmaschine (40) im Motormodus betreibbar ist, wobei das Verfahren eine Unterstützungsphase (STP2) umfasst, die von der Phase (STP1) mit optimiertem spezifischem Kraftstoffverbrauch verschieden ist, während der die elektrische Ausgangsmaschine (40) im Motormodus betrieben wird.

5. Drehflügler (1) mit mindestens einem ersten Turbomotor (10) und einem zweiten Turbomotor (20), die einen gemeinsamen Triebstrang (5) jeweils über einen ersten Ausgangstriebstrang (17) und einen zweiten Ausgangstriebstrang (27) antreiben, wobei der erste Turbomotor (10) eine erste freie Turbine (16) aufweist, die mit dem ersten Ausgangstriebstrang (17) verbunden ist, wobei der gemeinsame Triebstrang (5) zumindest einen Drehflügel (8) antreibt, der Drehflügler (1) eine elektrische Ausgangsmaschine (40) hat, die auf Anforderung zumindest im Generatormodus für elektrische Energie arbeitet, wobei sie durch den ersten Ausgangstriebstrang (17) angetrieben ist, der Drehflügler (1) eine elektrische Eingangsmaschine (55) hat, die auf Anforderung zumindest im Motormodus arbeitet, wobei die elektrische Eingangsmaschine (55) durch einen Eingangstriebstrang (58) mit einem Gasgenerator (21) dieses zweiten Turbomotors (20) verbunden ist,
**dadurch gekennzeichnet, dass** der Drehflügler (1) ein Unterstützungssystem (80) aufweist, das zur Durchführung des Verfahrens nach einem der Ansprüche 1 bis 4 konfiguriert ist.

6. Drehflügler nach Anspruch 5,
**dadurch gekennzeichnet, dass** erste Turbomotor (10) eine zusätzliche Eingangsmaschine (45) aufweist, die auf Anforderung zumindest im Motorbetrieb arbeitet, wobei die zusätzliche Eingangsmaschine (45) über einen zusätzlichen Eingangstriebstrang (48) mit einem Gasgenerator (11) des ersten Turbomotors (10) verbunden ist, wobei der zweite Turbomotor (20) eine zusätzliche Ausgangsmaschine (50) aufweist, die zumindest im Generatormodus für elektrische Energie arbeitet, indem sie über den zweiten Ausgangstriebstrang (27) angetrieben ist.

7. Drehflügler nach Anspruch 6,
**dadurch gekennzeichnet, dass** die zusätzliche Ausgangsmaschine (50) konfiguriert ist, um in einem Motormodus zu arbeiten.

8. Drehflügler nach einem der Ansprüche 5 bis 7,
**dadurch gekennzeichnet, dass** das Unterstützungssystem (80) umfasst:
- eine Steuereinheit (30), die die elektrische Ausgangsmaschine (40) und die elektrische Eingangsmaschine (55) steuert,
- einen ersten Kraftstoffdosierer (18), der von der Steuereinheit (30) gesteuert ist, um den ersten Turbomotor (10) mit Kraftstoff zu versorgen,
- einen zweiten Kraftstoffdosierer (28), der von der Steuereinheit (30) gesteuert ist, um den zweiten Turbomotor (20) mit Kraftstoff zu versorgen.

## Claims

1. Method for controlling at least one first turboshaft engine (10) and one second turboshaft engine (20) of a rotorcraft (1) which set a common kinematic linkage (5) in motion respectively via a first output kinematic linkage (17) and a second output kinematic linkage (27), the first turboshaft engine (10) having a first free turbine (16) connected to the first output kinematic linkage (17), said rotorcraft having an output electric machine (40) operating on request at least in electrical energy generator mode, being driven by the first output kinematic linkage (17), the rotorcraft (1) having an input electric machine (55) operating on request at least in motor mode, the input electric machine (55) being connected by an input kinematic linkage (58) to a gas generator (21) of this second turboshaft engine (20),
**characterised in that** the method comprises a phase (STP1) with optimised specific fuel consumption, comprising the following steps:
- supplying (STP1.1) fuel to the first turboshaft engine (10) in order to provide a first non-zero power to said common kinematic linkage (5), said first power being equal to an original power provided to said common kinematic linkage (5) by the first turboshaft engine (10) prior to an initiation of said phase (STP1) with optimised specific fuel consumption, said output electric machine (40) being inactive prior to said initiation of said phase (STP1) with optimised specific fuel consumption,
- operating (STP1.2) the output electric machine (40) in electrical energy generator mode in order to generate electrical energy,
- supplying (STP1.3) fuel to the second turboshaft engine (20) and operating the input electric machine (55) in motor mode in order to provide a second non-zero power to said common kinematic linkage (5), said second power being equal to an initial power provided to said common kinematic linkage by the second turboshaft engine (20) prior to an initiation of said phase (STP1) with optimised specific fuel consumption, said input electric machine (55) being inactive prior to an initiation of said phase (STP1) with optimised specific fuel consumption, neither of the first turboshaft engine and second turboshaft engine idling.

2. Method according to claim 1,
**characterised in that** said common kinematic linkage (5) is set in motion jointly by said first turboshaft engine (10) and said second turboshaft engine (20) during said phase (STP1) with optimised specific fuel consumption.

3. Method according to any one of claims 1 to 2,
**characterised in that** during said operation of the input electric machine (55) in motor mode, at least one portion (71) of said electrical energy (70) supplies said input electric machine (55) with electricity.

4. Method according to any one of claims 1 to 3,
**characterised in that** said output electric machine (40) being able to operate in motor mode, the method comprises an assistance phase (STP2) separate from the phase (STP1) with optimised specific fuel consumption during which the output electric machine (40) operates in motor mode.

5. Rotorcraft (1) equipped with at least one first turboshaft engine (10) and one second turboshaft engine (20) which set a common kinematic linkage (5) in motion respectively via a first output kinematic linkage (17) and a second output kinematic linkage (27), the first turboshaft engine (10) having a first free turbine (16) connected to the first output kinematic linkage (17), the common kinematic linkage (5) setting at least one rotary wing (8) in motion, said rotorcraft (1) having an output electric machine (40) operating on request at least in electrical energy generator mode, being driven by the first output kinematic linkage (17), the rotorcraft (1) having an input electric machine (55) operating on request at least in motor mode, the input electric machine (55) being connected by an input kinematic linkage (58) to a gas generator (21) of this second turboshaft engine (20),
**characterised in that** the rotorcraft (1) comprises an assistance system (80) configured to implement the method according to any one of claims 1 to 4.

6. Rotorcraft according to claim 5,
**characterised in that** said first turboshaft engine (10) comprises an additional input machine (45) operating on request at least in motor mode, the additional input machine (45) being connected by an additional input kinematic linkage (48) to a gas generator (11) of this first turboshaft engine (10), the second turboshaft engine (20) comprises an additional output machine (50) operating at least in electrical energy generator mode, being driven by the second output kinematic linkage (27).

7. Rotorcraft according to claim 6,
**characterised in that** said additional output machine (50) is configured to operate in a motor mode.

8. Rotorcraft according to any one of claims 5 to 7,
**characterised in that** said assistance system (80) comprises:
- a controller (30) controlling the output electric machine (40) and the input electric machine (55),
- a first fuel metering valve (18) commanded by the controller (30) to supply fuel to the first turboshaft engine (10),
- a second fuel metering valve (28) commanded by the controller (30) to supply fuel to the second turboshaft engine (20).
